# EUROPÄISCHE PATENTSCHRIFT

(11) **EP 2 531 368 B1**
(45) Veröffentlichungstag und Bekanntmachung des Hinweises auf die Patenterteilung: **10.04.2019**
(21) Anmeldenummer: 11705582.2
(22) Anmeldetag: 28.02.2011
(51) Int. Cl.: B60L 11/18, H04L 9/32, G08C 25/00

(54) **VERFAHREN UND VORRICHTUNG ZUR ZUORDNUNG EINES VON EINER LADESTATION ERFASSTEN MESSWERTES ZU EINEM NUTZER**
METHOD AND DEVICE FOR ASSIGNING A MEASURED VALUE DETECTED BY A CHARGING STATION TO A USER
PROCÉDÉ ET DISPOSITIF D'AFFECTATION À UN UTILISATEUR D'UNE VALEUR MESURÉE DÉTECTÉE PAR UNE STATION DE CHARGE

(30) Priorität: 28.07.2010 DE 102010032580; 03.05.2010 DE 102010019244
(43) Veröffentlichungstag der Anmeldung: 12.12.2012
(73) Patentinhaber: innogy SE, 45128 Essen (DE)
(72) Erfinder: GAUL, Armin, 59379 Selm (DE)
(74) Vertreter: Cohausz & Florack
(86) Internationale Anmeldenummer: PCT/EP2011/052904
(87) Internationale Veröffentlichungsnummer: WO 2011/138059

(56) Entgegenhaltungen:
- EP-A2- 2 445 746
- WO-A1-2010/009502
- WO-A2-2010/149449
- DE-A1- 10 204 065
- DE-A1-102009 030 091
- DE-U1-202008 014 766
- DE-U1-202008 014 768
- US-A- 5 563 491
- US-A1- 2006 089 733
- US-A1- 2010 013 434

## Beschreibung

Der Gegenstand betrifft ein Verfahren als auch eine Vorrichtung zur Zuordnung eines von einer Ladestation erfassten Messwertes zu einem Nutzer.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat. Schließlich muss sichergestellt sein, dass der Kunde auch nur für solche Tankvorgänge bezahlt, die er auch tatsächlich bewirkt hat. Es muss sicher verhindert werden, dass Messdaten einzelner Tankvorgänge mehreren Kunden parallel in Rechnung gestellt werden.

Insbesondere im Fall der Elektromobilität werden Ladevorgänge von unterschiedlichsten Kunden an ein und derselben Ladestation vorgenommen. Die Ladevorgänge stehen weder unter der ständigen Kontrolle des Messstellenbetreibers noch des Kunden, so dass sichergestellt werden muss, dass die von der Ladestation bzw. dem Messgerät in der Ladestation aufgenommenen Messwerte unverfälscht und eindeutig einem Kunden zuordenbar an eine Abrechnungszentrale übermittelt werden.

Somit ist besonders auf die Integrität, Authentizität, Überprüfbarkeit und Zuordenbarkeit der sowohl zwischen Fahrzeug und Ladestation als auch zwischen Ladestation und Abrechnungszentrale übertragenen Abrechungsdaten zu achten. Zum Einen ist es notwendig, dass die Daten über die Lademenge und/oder den Nutzer unverfälscht bleiben. Zum Anderen ist für Abrechnungszwecke eine Übertragung von Messdaten (Abrechnungsdaten) von der Ladestation an ein Abrechnungssystem vor Manipulationen zu sichern. Der Nutzer muss sicherstellen und überprüfen können, dass ihm nur die von ihm bezogene Energie in Rechnung gestellt wird. Auch muss sichergestellt werden, dass ein Ladevorgang nur einmalig dem richtigen Nutzer zur Verfügung gestellt wird.

Die DE 20 2008 014 766 U1 offenbart einen mobilen Stromzähler zum ortsunabhängigen Strombezug einer mobilen Speicher- und Verbrauchseinheit mit einem Akkumulator an einer ortsfesten Stromtankstelle.

Die DE 102 04 065 A1 betrifft ein Verfahren und eine Anordnung zur Behandlung von durch individuell gekennzeichneten Datenerfassungsinstrumente erfassten Daten sowie ein entsprechendes Computerprogrammprodukt und ein entsprechendes Speichermedium, welche insbesondere im Facility- und Energie-Management einsetzbar sind.

Die DE 20 2008 014 768 U1 offenbart eine Steuervorrichtung für eine Stromtankstelle, welche für einen Strombezug und/oder eine Stromeinspeisung einer mobilen Speicher- und Verbrauchseinheit geeignet ist.

Aus diesem Grunde lag dem Gegenstand die Aufgabe zugrunde, ein Verfahren sowie eine Vorrichtung zur Verfügung zu stellen, welche eine fälschungssichere Erfassung, Kommunikation und Abrechnung von Messdaten zu über eine Ladestation bezogener Energie gewährleisten.

Diese Aufgabe wird gegenständlich durch ein Verfahren nach Anspruch 1 oder 10 sowie eine Vorrichtung nach Anspruch 11 oder 12 gelöst.

Beim Ladevorgang bezieht das Elektrofahrzeug elektrische Energie von der Ladestation. In der Ladestation wird diese elektrische Energie mit Hilfe eines Messgerätes (Zählers) gemessen. Während des Ladevorgangs als auch beim Abschluss des Ladevorgangs ist es notwendig, dass die bezogene Energiemenge für Abrechungszwecke erfasst wird und der Benutzer des Fahrzeugs Kenntnisse über die bezogene Energiemenge erhält. Die Messung an sich wird in der Regel nicht zu beanstanden sein, da diese durch einen geeichten Zähler vorgenommen wird. Daher ist lediglich sicherzustellen, dass die Messwerte gesichert der Abrechnungszentrale zugeführt werden, wobei eine eindeutige, unverfälschbare Zuordnung zu einem Kunden/Vertrag gewährleistet sein muss.

Aus diesem Grunde wird vorgeschlagen, in oder durch die Ladestation eine Nutzeridentifikation (Kunden ID / Vertrags ID oder dergleichen) zu erfassen. Die Nutzeridentifikation kann eine Ziffer und/oder Zahlenfolge sein. Die Nutzeridentifikation kann mit einem Passwort verknüpft sein.

Der Nutzer kann die Nutzeridentifikation vor einem Ladevorgang der Ladestation mitteilen. Mit Hilfe der so erfassten Nutzeridentifikation kann der gemessene Messwert statisch mit einem bestimmten Nutzer verknüpft werden. Hierzu wird vorgeschlagen, dass dem Datenpaket gebildet aus zumindest dem Messwert und der Nutzeridentifikation eine eindeutige Beschreibung zugeordnet wird.

Die eindeutige Beschreibung kann dergestalt sein, dass diese das Datenpaket ein-eindeutig beschreibt. Eine Veränderung an dem Datenpakt würde zu einer veränderten Beschreibung führen. Somit ist es möglich, ausgehend von einem empfangenen Datenpaket, in Kenntnis der Erstellungsvorschrift für die eindeutige Beschreibung, eine Vergleichsbeschreibung zu erstellen und mit der ebenfalls empfangenen eindeutigen Beschreibung zu vergleichen. Sind die beiden Beschreibung voneinander unterschiedlich, so ist von einer Veränderung des Datenpakets, also zumindest von einer Veränderung der Nutzeridentifikation oder des Messwertes auszugehen.

Es hat sich gezeigt, dass die Messung der bezogenen Energiemenge im Regelfall korrekt ist und auch durch einen eichrechtlich abgenommenen Zähler gemessen wird. Somit stellt sich nur noch die Frage, wie sichergestellt werden kann, dass die gemessene Energiemenge ausschließlich dem richtigen Nutzer in Rechnung gestellt wird. Dies wird durch die Verknüpfung des Datenpakets mit der eindeutigen Bezeichnung erreicht. Insbesondere wird die eindeutige Bezeichnung durch das Messgerät, welches geeicht ist und somit besonders vertrauenswürdig ist, vorgenommen.

Die einander zugeordneten Datenpakete und eindeutigen Beschreibungen werden bevorzugt einem Fahrzeug und/oder einer Abrechnungszentrale zur Verfügung gestellt. Die Abrechungszentrale kann zunächst mit der ihr bekanten Rechenvorschrift aus dem empfangenen Datenpakte eine Vergleichsbeschreibung errechnen und diese mit der mit dem Datenpaket verknüpften Beschreibung vergleichen. Bestehen Unterschiede, kann auf eine Datenmanipulation geschlossen werden. In diesem Fall kann der Messwert verworfen oder andere Maßnahmen ergriffen werden. Ist der Vergleich positiv, so kann dem Datenpaket die Nutzeridentifikation entnommen werden und dem zugeordneten Nutzer (Kunden) die bezogene Energiemenge in Rechnung gestellt werden.

Das Datenpaket zusammen mit der Beschreibung kann abgespeichert werden. Hierdurch ist ein nachträglicher Nachweis möglich, dass ein bestimmter Kunde auch einen zugeordneten Ladevorgang initiiert hat, in dem er seine Nutzeridentifikation bereitgestellt hat.

Auch kann das Datenpaket zusammen mit der Bezeichnung an das Fahrzeug übermittelt werden. Im Fahrzeug kann der Nutzer dann ggf. unmittelbar nach dem Ladevorgang die Korrektheit des Datenpaketes überprüfen und ggf. signieren. Hierbei kann das Fahrzeug mit der bekannten Rechenvorschrift ebenfalls eine Vergleichsbeschreibung errechnen und diese mit der empfangenen Beschreibung vergleichen.

Gemäß einem Ausführungsbeispiel wird vorgeschlagen, dass die eindeutige Beschreibung eine erste Signatur oder ein Protokollausdruck zur dauerhaften, eindeutigen Protokollierung eines mit einer Nutzeridentifikation verknüpften Messgerätezählerstands ist.

Um es dem Fahrzeug bzw. dem Nutzer des Fahrzeugs zu ermöglichen, zumindest die Abrechungsdaten und/oder die bezogene Energiemenge zu bestätigen und zu überprüfen, wird das elektronische Signieren des Datenpakets zusammen mit der Beschreibung und das anschließende Übermitteln von der Ladestation an das Fahrzeug (und/oder umgekehrt) und/oder die Abrechnungszentrale vorgeschlagen.

Im Nachfolgenden werden die Begriffe "Signatur", "signieren" etc im Sinne einer elektronischen, datentechnischen Signatur verwendet. Auch kann durch das elektronische Signieren des Datenpakets sichergestellt werden, dass dieses nicht mehr nachträglich manipuliert wird.

Der Protokollausdruck kann in der Ladestation erstellt werden und regelmäßig von der Ladestation abgeholt werden. Auf diesem Protokollausdruck lässt sich eindeutig erkennen, welcher Ladevorgang mit welchen Nutzerdaten verknüpft ist. Im Falle einer Überprüfung können die Protokollausdrucke mit der Kundenrechnung abgeglichen werden und es kann festgestellt werden, ob Messdaten für mehr als eine Rechnung verwendet worden sind. Die Kontrolle kann stichprobenartig sein.

Wie bereits beschrieben wurde, wird auch vorgeschlagen, dass die eindeutige Beschreibung derart mit dem Inhalt des Datenpakets verknüpft ist, dass eine Veränderung des Inhalts des Datenpakets eine veränderte Beschreibung bewirkt. Es kann somit eine eins-zu-eins Beziehung zwischen dem Datenpaket und der Beschreibung erstellt werden. Verändert sich auch nur ein Bit im Datenpaket, würde dies zu einer Veränderung der Beschreibung führen. In der Ladestation, vorzugsweise dem Messgerät der Ladestation, ist eine Rechenvorschrift hinterlegt, die es ermöglicht, aus dem Datenpaket eine eindeutige Beschreibung zu erstellen. Dies kann unter Verwendung von Schlüsseln, wie nachfolgend auch beschrieben wird, erfolgen. Ist die Rechenvorschrift und ggf. der Schlüssel im Empfänger bekannt, so kann dieser aus dem empfangenen Datenpaket eine Vergleichsbeschreibung errechnen und mit der dem Datenpaket zugeordneten Beschreibung vergleichen und somit Manipulationen entdecken. Auch ist der eindeutige Nachweis einer Nutzung einer Ladestation durch einen Kunden mit dem beschriebenen Verfahren möglich.

Um die eindeutige Beschreibung zu erstellen, wird auch vorgeschlagen, dass zumindest eines Teils eines Messgeräteschlüssels erfasst wird. Dieser kann ein privater Schlüssel sein, der es erlaubt die eindeutige Bezeichnung so zu erstellen, dass diese manipulationssicher ist.

Auch wird vorgeschlagen, die ersten Signatur des Datenpakets mit Hilfe des Messgeräteschlüssels erstellt wird. Die Signatur kann über das gesamte Datenpaket oder einen Hashwert des Datenpakets errechnet werden. Auch ist es möglich, zunächst das Datenpaket aus Messgerätezählerstand und Nutzeridentifikation zu signieren, das Datenpaket und die Signatur in einem neuen Datenpaket zusammen zu fassen und im Anschluss weitere Daten, wie sie nachfolgend aufgezählt werden, dem neuen Datenpaket hinzuzufügen. Dieses neue Datenpaket mit den weitern Daten kann dann erneut signiert werden.

Gemäß einem Ausführungsbeispiel wird vorgeschlagen, dass das Datenpaket neben der Nutzeridentifikation und dem Messgerätezählerstand zumindest weitere Daten aus einer Messgeräteidentifikation, einem Messgerätestatus, Zeitinformationen, Datumsinformationen, einer Vertragsidentifikation, einem öffentlichen Messgeräteschlüssel oder einem Zeit-Index enthält. Diese Aufzählung ist nicht abschließend und kann um weiter relevanten Daten ergänzt werden.

Eine besonders einfache Eingabe der Nutzeridentifikation ist dann möglich, wenn die Nutzeridentifikation eine ASCII Zeichenfolge ist.

Für die eindeutige Zuordnung der Messdaten zu einem Kunden sollte diese möglichst unmittelbar in der Messstelle erfolgen, um Manipulation weitestgehend auszuschließen. Daher wird vorgeschlagen, dass die Schritte nach Anspruch 1 ladestationsseitig durchgeführt werden.

Auch wird vorgeschlagen, dass die Nutzeridentifikation über an der Ladestation angeordnete Erfassungsmittel erfasst wird. Die Erfassungsmittel können in, an oder außerhalb der Ladestation angeordnet sein.

Es wird vorgeschlagen, dass die Nutzeridentifikation von der Ladestation drahtgebunden, mittels RFID, manueller Nutzereingabe, biometrischer Nutzerdaten, von dem Fahrzeug und/oder drahtlos erfasst wird. Hierbei ist es möglich, dass die Nutzeridentifikation mittels biometrischer Verfahren (Fingerabdruckscan, Gesichtsscan, Irisscan oder dergleichen) durch die Ladestation erfasst wird.

Auch kann die Nutzeridentifikation von einem Transponder in einem Fahrzeugschlüssel oder einem anderen Transponder, z.B. in dem Ladekabel oder dem Ladekabelstecker, ausgelesen werden.

Darüber hinaus kann die Nutzeridentifikation in einem Speicher in dem Ladekabel oder dem Ladekabelstecker hinterlegt sein und von dort durch die Ladestation ausgelesen werden.

Die Ladestation erfasst neben der Energiemenge und der Nutzeridentifikation zumindest auch eine Identifikation des Messgeräts. Dies kann eine Gerätenummer sein. Die Identifikation des Messgeräts kann auch die zusätzliche Identifikation der Ladestation sein. Mit Hilfe zumindest dieser Werte kann das Datenpaket erweitert werden.

Mit Hilfe eines eindeutigen, aus dem Datenpaket und einem dem Messgerät (Zähler) oder der Ladestation zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Ladestation zugeordneten Schlüssels errechnet werden. Auch kann eine Signatur unmittelbar aus dem Datenpaket und dem dem Messgerät (Zähler) oder der Ladestation zugeordneten Schlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation erstellt wurde.

Beispielsweise bei einem Ladevorgang ist es möglich, dass der Nutzer zu Beginn eines Ladevorgangs die Messgeräteidentifikation, die beispielsweise außen am Gehäuse der Ladestation angeordnet ist, notiert und zusätzlich die Uhrzeit des Beginns des Ladevorgangs notiert. Zum Ende der Ladevorgang kann der Nutzer erneut die Urzeit notieren.

Wenn diese Zeitinformationen zusammen mit dem Messgerätezählerstand Teil des jeweiligen Datenpakets werden, so kann eine Signatur dieses Datenpakets durch den Nutzer überprüft werden, wenn der Nutzer zusätzlich den öffentlichen Messgeräteschlüssel kennt.

Zum Beispiel ist es möglich, dass der Nutzer zu Beginn und zum Ende eines jeden Ladevorgangs die Messgeräteidentifikation und die jeweilige Uhrzeit notiert.

Die Ladestation erstellt ein Datenpaket, welches eine Vertrags- oder Kundenidentifikation in dem Datenpaket und zusätzlich beispielsweise die Uhrzeit als auch die Messgeräteidentifikation enthält. Zusätzlich kann das Datenpaket den Messgerätzählerstand und den Messgerätestatus enthalten.

Der Messgerätestatus kann eine Information über die technische Funktionalität der Ladestation enthalten, z.B. ein binärer Wert, der angibt, ob die Ladestation fehlerfrei arbeitet.

Mit Hilfe des privaten Messgeräteschlüssels kann eine Signatur aus diesem Datenpaket erstellt werden. Die Signatur zusammen mit dem Datenpaket kann von der Ladestation an die Abrechnungsstation übermittelt werden.

Durch die Signatur des Datenpakets ist sichergestellt, dass die in dem Datenpaket enthaltenen Messwerte und die Nutzeridentifikation untrennbar miteinander verbunden sind. Wird einer der beiden Werte verändert, so ergäbe sich eine andere Signatur. Wenn der Nutzer z.B. auch noch die Zeitinformation selber erfassen kann, kann er auch eine Manipulation des Messwertes, wenn dieser die Zeitinformation beinhaltet, feststellen.

Zum Ende eines Abrechnungszeitraums erhält der Nutzer vom Stromnetzbetreiber/Energielieferanten eine Rechnung über die von ihm bezogene Energiemenge. In dieser Rechnung kann beispielsweise jeder Ladevorgang aufgeschlüsselt nach Start und Ende des Ladevorgangs aufgelistet sein.

Zusätzlich kann jeder Rechnungsposition die Messgeräteidentifikation, beispielsweise eine Ladepunkt-ID, als auch eine Zählernummer zugeordnet sein. Zusätzlich können die Start- und Endzählerstände sowie die Start- und Endzeiten (Zeit, Datum) jeder Rechnungsposition zugeordnet sein. Mit diesen Informationen kann dem Kunden in der Rechnung die bezogene Energiemenge für jeden Ladevorgang mitgeteilt werden.

Darüber hinaus kann der Kunde zusammen mit der Rechnung zu jeder Rechnungsposition eine Information über den Messgerätestatus als auch die Signatur, die für das entsprechende Datenpaket erstellt wurde, erhalten. Für jede Rechnungsposition können z.B. zwei Signaturen erstellt werden. Eine erste Signatur für das Datenpaket, das zu Beginn des Ladevorgangs erstellt wurde und eine zweite Signatur für das Datenpaket, das zum Ende des Ladevorgangs erstellt wurde.

Durch die Verwendung der Nutzeridentifikation im Datenpaket kann der Nutzer auch überprüfen, ob die in Rechnung gestellte Energiemenge tatsächlich seiner Nutzeridentifikation in der Ladestation zugeordnet wurde.

Abschließend kann der Nutzer den öffentlichen Messgeräteschlüssel mitgeteilt bekommen.

Da der Kunde selbstständig sowohl Nutzeridentifikation, die Messgeräteidentifikation als auch die Uhrzeit des jeweiligen Ladevorgangs notiert hat, kann er zusammen mit den zusätzlichen Informationen aus der Rechnung, beispielsweise Ladepunktidentifikation, Zählernummer, Zählerstand und dem öffentlichen Schlüssel, die ihm mitgeteilte Signatur für jedes Datenpaket einzeln überprüfen. Hierzu kann er beispielsweise mittels der ihm mitgeteilten Signatur und des Mittels ihm mitgeteilten öffentlichen Schlüssels den Referenzwert errechnen. Ein Vergleichsreferenzwert kann der Kunde beispielsweise mittels der von ihm notierten Information und der zusätzlichen Information aus der Rechnung errechnen und überprüfen, ob die Daten identisch sind. Somit hat der Kunde die Möglichkeit, die Richtigkeit der Rechnungspositionen zu überprüfen.

Es kann beispielsweise mit einem empfängerseitig bekannten, zu dem Signaturschlüssel passenden Schlüssel der Referenzwert oder das zu signierende Datenpaket aus der Signatur zurück errechnet werden. Dazu kann beispielsweise empfängerseitig ein Vergleichs-Referenzwert ausgehend von dem Datenpaket errechnet werden. Stimmen errechneter Referenzwert und Vergleichs-Referenzwert überein, kann von einer Datenintegrität ausgegangen werden.

Beispielsweise kann aus Nutzdaten (Datenpaket) ein Referenzwert berechnet werden. Aus diesem Referenzwert kann mit einem privaten Schlüssel eine Signatur errechnet werden. Die Signatur kann zusammen mit den Nutzdaten in einem Datencontainer, als zwei getrennte Dateien oder eingebettet in die Nutzdaten, an einen Empfänger verschickt werden. Der Empfänger kann mit einem zum privaten Schlüssel passendem öffentlichen Schlüssel aus der Signatur den Referenzwert errechnen. Aus den ebenfalls empfangenen Nutzdaten kann empfängerseitig ebenfalls ein Vergleichs-Referenzwert berechnet werden. Stimmen Referenzwert und Vergleichs-Referenzwert überein, kann die Integrität, Authentifizierung, Authentizität der Nutzdaten sichergestellt werden.

Vorteilhafterweise wird dem Kunden zusammen mit der Rechnung für jedes Datenpaket eine gesonderte Signatur mitgeteilt. Für jede Rechnungsposition, die sich aus zwei Messungen zusammensetzt, nämlich dem Beginn und dem Ende eines Ladevorgangs stehen zwei Datensätze zur Verfügung, beziehungsweise stehen bei einem Tarifwechsel (mit drei oder vier Messungen) drei oder vier Datensätze zur Verfügung, nämlich Start und Ende des Ladevorgangs sowie ein weitere Datensatz für den Tarifwechsel oder zwei Datensätze, einer für das Ende des ersten Tarifs und einer für das Ende des zweiten Tarif, bzw. den jeweiligen Zeitpunkten innerhalb eines Tarifs, denen jeweils eine Signatur zugeordnet ist. Der erste Datensatz bestimmt den Beginn des Ladevorgangs und enthält zusätzlich beispielsweise Messgeräteidentifikationen (Ladepunkt-ID, Zählernummer), den Zählerstand und das Statuswort. Für das Ende des Ladevorgangs existiert ein zweiter Datensatz, der,den Zeitpunkt des Endes des Ladevorgangs enthält. Das gleiche gilt für die Datensätze bei einem Tarifwechsel, denen auch eine Zeitinformation, eine Messgeräteidentifikation und ein Zählerstand zugeordnet sind.

Für jeden Datensatz wird in der Ladestation eine Signatur errechnet, welche dem Nutzer im Klartext zur Verfügung gestellt wird. Die Richtigkeit der Signatur kann der Nutzer dadurch überprüfen, dass er mit Hilfe der von ihm notierten Zähleridentifikation und Zeitinformation zusammen mit den ihm mitgeteilten Informationen über Zählerstand und Statuswort als auch dem öffentlichen Schlüssel eine Vergleichssignatur errechnen kann und überprüfen kann, ob die mitgeteilte Signatur und die errechnete Vergleichssignatur identisch sind. Die grundsätzliche Verwendbarkeit eines Datensatzes ergibt sich für den Kunden daraus, dass er die Identifikationsnummer des Ladepunktes (Zählers) sowie Zeitinformationen (Datum und/oder Uhrzeit) mit seinen Aufzeichnungen vergleicht.

Dadurch, dass die mitgeteilte Signatur ein-eindeutig dem Datenpaket zugeordnet werden kann, könnte der Nutzer eine Manipulation des Wertes des Messgerätezählerstands feststellen. Dann wäre nämlich die ihm mitgeteilte Signatur nicht mehr identisch mit der von ihm berechneten Signatur. Ein veränderter Zählerstand würde mit identischen Informationen über Zeitpunkt der Ladung und/oder Messgeräteidentifikation zu einer anderen Signatur führen. Der Kunde notiert aber vorzugsweise den Zeitpunkt des Ladevorgangs als auch die Messgeräteidentifikation selber, so dass er eine Manipulation im Bereich des Messgerätezählerstands erkennen kann.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Ändern sich bei der Übertragung Werte innerhalb des Datenpakets, so kann empfängerseitig, bspw. im Fahrzeug oder der Abrechnungszentrale, festgestellt werden, dass die mit dem Datenpaket übertragene Signatur nicht zu dem empfangenen Datenpaket passt und eine Veränderung des Datenpakets stattgefunden haben muss. Der Vergleich der empfangenen Signatur mit einer errechneten Vergleichs-Signatur oder der Vergleich eines Referenzwertes mit einem Vergleichs-Referenzwertes ergibt bei veränderten Daten einen Unterschied zwischen diesen beiden Werten.

Gemäß einem vorteilhaften Ausführungsbeispiel wird vorgeschlagen, dass das Datenpaket und die eindeutige Beschreibung zumindest zum Beginn und zum Ende eines Ladevorgangs und/oder zyklisch während eines Ladevorgangs erstellt und an das Fahrzeug und/oder die Abrechnungsstation übermittelt werden. In der Abrechnungsstation kann somit aus den beiden Datenpaketen eine Rechnungsposition erstellt werden, in dem die Veränderung des Messgerätezählerstands ausgewertet wird und anhand dieser Veränderung eine Energiemenge berechnet wird. Zusammen mit Tarifinformationen kann mit der errechneten Energiemenge ein Rechnungsbetrag bestimmt werden. Dadurch, dass für jedes Datenpaket eine Signatur erstellt wurde und der Nutzer zum Beginn und zum Ende eines jedes Ladevorgangs selbsttätig Zeitinformationen notiert hat, die Teile des Datenpakets und somit relevant für die Signatur sind, kann der Kunde anhand der Signatur überprüfen, ob die der Rechnung zugrundeliegenden Informationen korrekt sind oder nicht.

Auch wird vorgeschlagen, dass das Datenpaket und die eindeutige Beschreibung zu einem Zeitpunkt eines Tarifwechsels erstellt wird, wobei zu einem Zeitpunkt eines Tarifwechsels ein erstes Datenpaket und die jeweilige Signatur für ein Ende eines ersten Tarifs erstellt wird und ein zweites Datenpaket und die jeweilige Signatur für einen Beginn eines zweiten Tarifs, oder nur ein Datenpaket den Tarifwechsel repräsentierend, erstellt wird. Somit wird sichergestellt, dass bei einem Tarifwechsel die jeweils zu einem bestimmten Tarif bezogene Energiemenge festgestellt werden kann. Wechselt ein Tarif während eines Ladevorgangs, so wird der Zählerstand des Messgerätes im Moment des Tarifwechsels erfasst. Mit Hilfe dieses Zählerstandes und der Zeitinformation unmittelbar vor dem Tarifwechsel wird ein erstes Datenpaket erstellt und zusammen mit der Zeitinformation unmittelbar nach einem Tarifwechsel ein zweites Datenpaket. Jedes der Datenpakete wird signiert und an die Abrechnungsstation übermittelt, so dass eine Überprüfung möglich ist. Alternativ kann auch ein Datenpaket für den Wechselzeitpunkt erstellt werden.

Gemäß einem vorteilhaften Ausführungsbeispiel wird vorgeschlagen, dass die Ladestation und/oder die Abrechnungsstation aus dem Messgerätezählerstand zum Beginn eines Ladevorgangs und dem Messgerätezählerstand zum Ende eines Ladevorgangs oder bei einem Tarifwechsel eine bezogene Energiemenge berechnet. Mit Hilfe des Unterschieds zwischen den jeweiligen Messgerätezählerständen kann eine Energiemenge berechnet werden, die für die Erstellung einer Rechnungsposition verwendet werden kann.

Wie bereits zuvor erläutert, können von der Abrechnungsstation Abrechnungsdaten zu der bezogenen Energiemenge bereitgestellt werden. Diese Abrechnungsdaten können im Rahmen einer Rechnung dem Nutzer mitgeteilt werden. Die Rechnung kann aus mehreren Elementen gebildet sein. So kann beispielsweise eine erste Seite einer Rechnung die Summe der einzelnen Rechnungspositionen pro Tarif auflisten. Eine zweite Seite einer Rechnung kann für jede Rechnungsposition einen Start- und Endzeitpunkt ausgeben. Zusätzlich hierzu können Informationen zu Messgeräteidentifikationen, beispielsweise eine Ladepunkt-ID, als auch eine Zählernummer ausgegeben werden. Auch kann die Adresse der jeweiligen Ladestation ausgegeben werden. Zusätzlich kann für jeden Zeitpunkt ein Zählerstand ausgegeben werden und zusammen mit einem Tarif auf der Rechnung angegeben werden. Schließlich kann für jeden Ladevorgang die bezogene Energiemenge ausgegeben werden.

Auf einer weiteren Seite kann eine Rechnung für jede Rechnungsposition Zeitinformationen ausgeben. Außerdem kann die Zählernummer oder eine sonstige Messgeräteidentifikation zusammen mit dem Zählerstand und/oder einem Messgerätestatus ausgegeben werden. Diese Daten können beispielsweise Bestandteil des Datenpakets gewesen sein. In der gleichen Zeile kann dann eine Signatur ausgegeben werden, die sich aus den angegebenen Daten und dem Messgeräteschlüssel ergeben hat.

Abschließend kann auf einer weiteren Seite der Rechnung für jedes Messgerät ein öffentlicher Schlüssel angegeben werden.

Der öffentliche Schlüssel kann zusammen mit den Informationen, die für jedes Datenpaket dem Benutzer mitgeteilt worden sind, überprüft werden, ob die Signatur korrekt ist. Da der Nutzer sowohl den Zeitpunkt als auch die Zählernummer notiert hat, kann er mit den von ihm selbst notierten Informationen die Signatur auf Authentizität und Integrität überprüfen.

Auch ist es möglich, dass die oben genannten Informationen abrufbar, insbesondere über ein Weitverkehrsnetz, insbesondere über das Internet bereitgehalten werden.

Gemäß einem vorteilhaften Ausführungsbeispiel wird vorgeschlagen, dass die Abrechnungsdaten zugriffsgeschützt bereitgehalten werden. Insbesondere die rechnungsbezogenen und kundenbezogenen Daten können zugriffsgeschützt bereitgehalten werden, beispielsweise passwortgeschützt zusammen mit einer Kunden- oder Vertragsidentifikation. Somit wird sichergestellt, dass nur Berechtigte Zugriff auf Rechnungsinformationen haben. Der Zugriff auf die öffentlichen Schlüssel der jeweiligen Messgeräte kann jedoch so geschützt sein, dass alle Kunden eines Energieversorgers hierauf einen gemeinsamen Zugriff haben. Alternativ kann hier sogar gänzlich auf einen Zugriffsschutz verzichtet werden.

Um sicherzustellen, dass seitens des Energieanbieters keine Manipulation der Rechnungsdaten erfolgen kann, was beispielsweise dadurch möglich wäre, dass der öffentliche Schlüssel manipuliert wird, wird vorgeschlagen, dass die öffentlichen Messgeräteschlüssel von Messgeräten der Ladestationen durch einen von der Abrechnungsstation logisch und/oder räumlich getrennten Computer bereitgehalten werden. Insbesondere können die öffentlichen Schlüssel bei einer Eichsstelle oder Prüfstelle vorgehalten werden, so dass eine Manipulation durch den Energieanbieter unmöglich wird.

Um den Kunden die Überprüfung der Rechnungsdaten zu erleichtern, wird vorgeschlagen, dass ein Computerprogramm zur Errechnung und/oder Überprüfen der Signatur für den jeweils zugeordneten Messgerätezählerstand bereitgestellt wird. Dieses Programm kann beispielsweise aus den Online verfügbaren Rechnungsdaten oder auch aus den von Kunden eingegebenen Rechnungsdaten die Signatur errechnen. Der Kunde kann beispielsweise den von ihm notierten Zeitpunkt sowie die von ihm notierte Zählernummer von Hand eingeben. Zusammen mit diesen Informationen kann das Programm aus den Rechnungsinformationen, beispielsweise dem Zählerstand und dem Statuswort, unter Verwendung des öffentlichen Schlüssels die Signatur errechnen. Diese Signatur kann dann durch das Programm automatisch mit der Signatur verglichen werden, die in den Rechnungsdaten enthalten war. Der Kunde kann diese Überprüfung jedoch auch selbst durchführen, da die von dem Programm errechnete Vergleichssignatur im Klartext ausgegeben wird und die den Rechnungsdaten zugrunde liegende Signatur ebenfalls im Klartext ausgegeben wurde. Dieses Programm kann von einem Computer zur Verfügung gestellt werden, der logisch und/oder räumlich von der Abrechnungsstation getrennt ist. Insbesondere kann eine Eichstelle neben den öffentlichen Schlüsseln dieses Programm zur Verfügung stellen.

Gemäß einem Ausführungsbeispiel kann im Messgerät oder der Ladestation ein Paar aus öffentlichem Messgeräteschlüssel (PuM) und privatem Messgeräteschlüssel (PiM) gespeichert sein. Mit Hilfe des privaten Messgeräteschlüssels (PiM) kann eine erste Signatur (SD) des Datenpaketes erstellt werden. Hierzu kann beispielsweise aus einem dem Datenpaket zugeordneten Referenzwert mit Hilfe des privaten Messgeräteschlüssels (PiM) ein Kryptogramm errechnet werden. Dieser Referenzwert kann ein Hash-Code sein.

Empfängerseitig, z.B. in einer Abrechnungszentrale oder durch den Nutzer kann die Authentizität und Datenintegrität des empfangenen Datenpaketes dadurch überprüft werden, dass das empfangene Kryptogramm mit Hilfe des empfängerseitig bekannten öffentlichen Messgeräteschlüssels entschlüsselt wird und der Referenzwert somit berechnet wird. Ein Vergleich mit einem empfängerseitig aus dem Datenpaket errechneten Referenzwert ermöglicht die Überprüfung der Datenintegrität.

Dadurch, dass mit einem eindeutig einem Benutzer, einem Fahrzeug oder einem Vertrag zugeordneten öffentlichen Schlüssel das Kryptogramm entschlüsselt werden kann und bei einer entsprechenden Zertifizierung des zueinander gehörigen Schlüsselpaares kann auch die Authentizität der Signatur überprüft werden. Die Signatur kann aus einem Referenzwert oder unmittelbar aus dem Datenpaket errechnet werden.

Beispielsweise ist es möglich, dass der öffentliche Messegeräteschlüssel (PuM) in einer Abrechnungszentrale bekannt ist. Auch kann der öffentliche Messgeräteschlüssel (PuM) in dem Datenpaket enthalten sein.

Ein Hash-Code kann mittels eines eindeutigen Rechenverfahrens als ein statistisch eindeutiger Referenzwert errechnet werden. Ein Hash-Code kann ein aus einer endlichen Vielzahl von Werten ermittelter Wert sein. Aufgrund der Vielzahl der möglichen Hash-Codes kommt es bei einer Veränderung des Datensatzes zu einem geänderten Hash-Code. Dass zwei unterschiedliche Datensätze einen gleichen Hash-Code erzeugen ist, abhängig von der Anzahl und Art der Koeffizienten zur Berechnung des Hash-Codes, äußerst unwahrscheinlich. Für die diese Wahrscheinlichkeit ist das Verfahren zur Berechnung des Hash-Wertes wesentlich. Beispiele für Hash-Code Berechnungsmethoden können MD2, MD4, MD5, SHA, RIPEMD-160, Tiger, HAVAL, Whirlpool, LM-Hash oder NTLM. Andere Verfahren, insbesondere kryptographische Verfahren sind ebenso geeignet.

Eine kryptologische Hashfunktion sollte zumindest eine Einwegfunktion sein. Sogenannte Einweg-Hashfunktionen (One-Way-Hash Functions, OWHFs) erfüllen die Bedingung, eine Einwegfunktion zu sein, d. h. zu einem gegebenen Ausgabewert h(x) = y ist es praktisch unmöglich, einen Eingabewert x zu finden (engl. preimage resistance). Außerdem ist eine Hashfunktion besser für die Kryptographie geeignet, wenn möglichst keine Kollisionen auftreten. Das heißt, dass für zwei verschiedene Werte x und x' der Hashwert (Hash-Code) möglichst auch verschieden sein sollte: h(x) ungleich h(x'). Ist dies immer der Fall, so kann von einer kollisionsresistenten Hashfunktion (Collision Resistant Hash Function, CRHF) gesprochen werden.

Mit Hilfe der ersten Signatur (SD) und dem in der Abrechnungszentrale empfangenen Datenpaket kann die Authentizität und Integrität des von der Ladestation erstellten Datenpaketes überprüft werden. In der Abrechnungszentrale oder für den Nutzer ist der öffentliche Messgeräteschlüssel (PuM) bekannt oder wurde von der Ladestation empfangen. Außerdem wurde in der Ladestation die erste Signatur empfangen.

Aus der ersten Signatur kann mit Hilfe des öffentlichen Messgeräteschlüssels (PuM) ein Referenzwert errechnet werden, der mit einem aus dem Datenpaket errechneten Vergleich-Referenzwert verglichen werden kann. Hierdurch kann überprüft werden, ob die in dem Datenpaket enthaltenen Messdaten auf der Kommunikationsstrecke von Ladestation zum Fahrzeug und zurück und anschließend zur Abrechnungszentrale manipuliert wurden.

Gemäß einem vorteilhaften Ausführungsbeispiel wird auch vorgeschlagen, dass eine Signatur mittels eines SHA-256 Verfahrens ermittelt wird. Hierbei kann beispielsweise eine Variante FIPS 180-2 verwendet werden.

Insbesondere wird vorgeschlagen, dass eine Signatur mit Hilfe eines Elliptic-Curve Kryptografieverfahrens ermittelt wird. Hierbei ist es beispielsweise möglich, dass ein ECC-Verfahren mit 192 Bit verwendet wird.

Gemäß einem vorteilhaften Ausführungsbeispiel wird auch vorgeschlagen, dass das Datenpaket mittels eines asymmetrischen Verfahrens signiert wird. Bei diesem Verfahren wird, wie bereits zuvor erläutert, ein privater Schlüssel für eine Signatur verwendet und ein öffentlicher Schlüssel, der empfängerseitig bekannt ist, für die Entschlüsselung der Signatur verwendet.

Um eine Zuordnung eines Messwertes zu einem Mess-Zeitpunkt zu ermöglichen, wird vorgeschlagen, dass das Datenpaket einen Zeit-Index enthält. Ein Zeit-Index kann beispielsweise ein Sekundenindex sein, der über die gesamte Lebensdauer des Ladegeräts im mathematischen Sinne streng monoton wachsend ist und eine natürliche Zahl darstellt. Mit Hilfe dieses Sekundenindexes ist es möglich, eine ein-eindeutige Zuordnung des Mess-Zeitpunktes zu einem Messwert vorzunehmen. Auch kann ein Betriebssekundenzähler verwendet werden, der eine monoton wachsende natürliche Zahl sein kann, deren Ziel die eindeutige Zuordnung des Zeitpunktes eines Ereignisses zu der als Bezugssystem angenommenen gesetzlichen Zeit ist.

Um das Fahrzeug ständig über momentane Messwerte zu informieren, so dass beispielsweise ein Nutzer über den Ladezustand und die bezogene Energie informiert ist, wird vorgeschlagen, dass zyklisch zumindest ein Messwert durch die Ladestation ermittelt wird und dass ein zumindest den Messwert enthaltenes Datenpaket zwischen Ladestation und Elektrofahrzeug ausgetauscht wird.

Auch kann die Ladestation das zu Beginn einer Messung erstellte und signierte Datenpaket und das zum Ende einer Messung erstellte Datenpaket an die Abrechungszentrale übermitteln um dort aus dem Delta der Messwerte die entnommene Energiemenge berechnen zu können.

Auch kann in der Ladestation zum Ende eines Ladevorgangs ein Delta aus den Messwerten errechnet werden, wobei dieses Delta zumindest Auskunft über die bezogene Energiemenge geben kann. Ein Datenpaket mit diesem Delta kann an die Abrechungszentrale übermittelt werden.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Die zuvor genannten Verfahren können auch als Computerprogramm oder als auf einem Speichermedium gespeichertes Computerprogramm realisiert werden. Hierbei kann fahrzeugseitig, ladestationsseitig und/oder abrechnungszentralenseitig ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1a: einen schematischen Aufbau eines Systems zum Laden eines Elektrofahrzeugs;
- Fig. 1b: einen schematischen Aufbau eines Messgerätes mit Erfassungsmitteln zum Erfassen einer Nutzeridentifikation;
- Fig. 2a-d: beispielhafte Datenpakete und Signaturen;
- Fig. 3: eine Ablaufdiagramm eines beispielhaften Verfahrens.

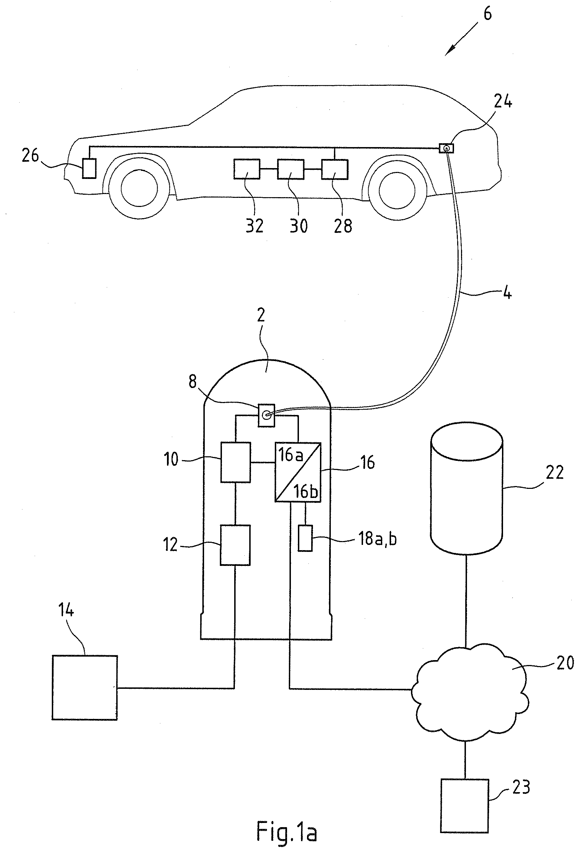

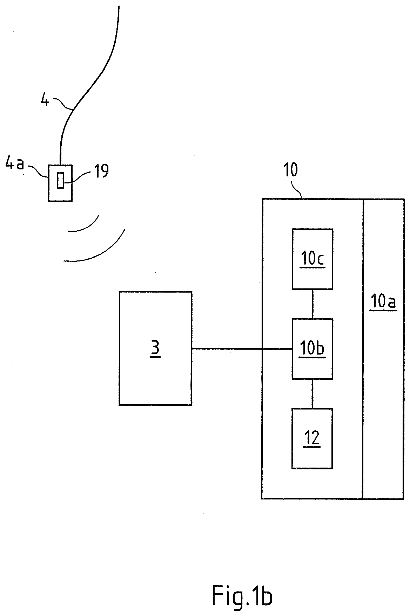

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die Anschlussdose 8 ist elektrisch mit einem Messgerät 10 verbunden. Das Messgerät 10 misst die elektrische Leistung, die über die Anschlussdose 8 an das Fahrzeug 6 über das Verbindungskabel 4 abgegeben wird. Die elektrische Leistung wird über einen elektrischen Anschluss 12 von einem elektrischen Energieversorgungsnetz 14 bezogen.

Gekoppelt an das Messgerät 10 ist eine Recheneinheit 16 mit einer Kommunikationseinheit 16a und einer Signatureinheit 16b. Die Signatureinheit 16b kann eine dem Ladegerät 2 bzw. dem Messgerät 10 zugeordnete eindeutige Identifikation, beispielsweise eine privaten Messgeräteschlüssel (PiM) 18a erfassen. Auch kann ein öffentlicher Messgeräteschlüssel (PuM) 18b erfasst werden.

Die Recheneinheit 16 ist über ein Datennetz 20 mit einer Abrechnungszentrale 22 verbunden.

Ferner ist ein weiterer Computer 23 vorgesehen, der logisch und räumlich von der Abrechnungszentrale 22 getrennt ist. Insbesondere kann der Computer 23 mit dem Datennetz 20, z.B. einem Weitverkehrsnetz, z.B. dem Internet, verbunden sein. Der Computer 23 kann beispielsweise in den Räumen und/oder unter Aufsicht einer Eichbehörde betrieben werden.

Über das Datennetz 20 können Nutzer sowohl auf die Abrechnungszentrale 22 als auch den Computer 23 zugreifen. Bei der Abrechnungszentrale 22 können die Nutzer Rechnungsdaten abrufen. Bei dem Computer 23 können sich Nutzer z.B. öffentliche Messgeräteschlüssel und/oder Programme zum Errechnen einer Vergleichssignatur beschaffen.

In dem Fahrzeug 6 ist neben einer mit einem Anschluss 24 verbundenen Batterie 26 eine Kommunikationseinheit 28 vorgesehen. Die Kommunikationseinheit 28 ermöglicht das Senden und Empfangen von Daten auf dem Verbindungskabel 4. Angeschlossen an die Kommunikationseinheit 28 ist eine Signatureinheit 30. Die Signatureinheit 30 kann von dem Fahrzeug 6 eine eindeutige Identifikation 32 erfassen.

Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10 erfasst. Die Energiemenge, beispielsweise ein Zählerstand des Messgerätes 10, als auch andere Daten, wie beispielsweise die Identifikation der Ladestation 2 und/oder die Identifikation des Messgerätes 10, ein Zeitstempel, ein Zeit-Index, ein Status der Ladestation 2 und/oder ein Status des Messgerätes 10, ein Anfangszählerstand, ein Endzählerstand und/oder dergleichen kann über das Verbindungskabel 4 an das Fahrzeug 6 und/oder die Abrechnungszentrale 22 übermittelt werden.

Für eine eindeutige Zuordnung des Zählwertes des Messgerätes zu einem Kunden muss ein Datenpaket gebildet aus Zählerstand und Nutzeridentifikation mit einer eindeutigen Beschreibung, z.B. einer Signatur, verknüpft werden. Hierzu wird eine Nutzeridentifikation 19 durch die Ladestation eingelesen.

Dies ist beispielhaft in Fig. 1b gezeigt. Fig. 1b zeigt ein Messgerät 10 mit einem Strommesser 10a. Der Messgerätezählerstand des Strommessers 10a kann durch das Messgerät 10 ausgegeben werden. Dies kann verschlüsselt und signiert erfolgen, wie nachfolgend noch beschrieben wird. Hierzu kann im Messgerät 10 die Signatureinrichtung 12 angeordnet sein. In dem Messgerät 10 kann eine CPU 10b vorhanden sein und der Messgeräteschlüssel 18 aus privatem Messgeräteschlüssel 18a und öffentlichen Messgeräteschlüssel 18b gespeichert sein.

Die CPU 10b ist mit einem Transponderlesegerät 3 verbunden. Dieses Transponderlesegerät 3 kann in dem Messgerät 10 oder außerhalb angeordnet sein. Über das Transponderlesegerät kann eine Nutzeridentifikation 19 von eine in einem Ladekabelstecker 4a angeordneten Transponder ausgelesen werden.

Auch kann das Transponderlesegerät 3 durch ein anderes Lesegerät ersetzt sein. Zum Beispiel könnte eine Kommunikation mit dem Fahrzeug 2 aufgebaut werden und über einen Pilotleiter des Ladekabels 4 die Nutzeridentifikation erfasst werden.

Auch könnte das Lesegerät eine Tastatur sein, über der der Nutzer seine Nutzeridentifikation eingibt. Auch könnte die Nutzeridentifikation von einer Chipkarte oder Magnetstreifenkarte des Nutzers durch das Lesegerät eingelesen werden.

Auch könnte die Nutzeridentifikation 19 von einer Abrechnungszentrale 22 dem Lesegerät 3 zur Verfügung gestellt werden. Dann könnte ein Kunde z.B. einen Ladevorgang telefonisch bei der Abrechnungszentrale 22 unter Nennung der Ladestation ID freigeben. Hierzu müsste er z.B. seine Nutzeridentifikation 19 und ein Passwort der Abrechnungszentrale 22 bekanntgeben. Ist eine Überprüfung des Passworts positiv, so könnte die Abrechnungszentrale 22 z.B. verschlüsselt die Nutzeridentifikation über das Datennetz 20 an die Ladestation 2 und das Lesegerät 3 übermitteln.

Um nun die Abrechnungsdaten fest mit der Nutzeridentifikation zu verknüpfen, wird vorgeschlagen, dass ein Datenpaket umfassend zumindest den Messgerätezählerstand und die Nutzeridentifikation signiert an die Abrechnungszentrale 22 übermittelt wird.

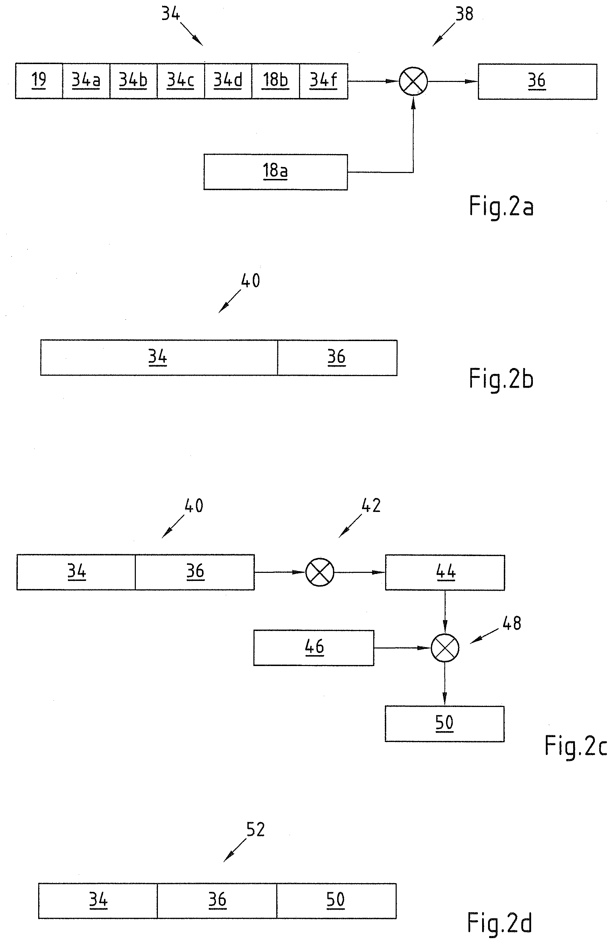

Hierzu übermittelt die Kommunikationseinheit 16 ein Datenpaket, wie es in den Figuren 2 erläutert ist. In dem Datenpaket können die genannten Messgrößen gespeichert werden. In dem Datenpaket kann insbesondere ein öffentlicher Messgeräteschlüssel (PuM) 18b gespeichert werden. Auch können neben dem Datenpaket der öffentliche Messgeräteschlüssel (PuM) 18b und/oder Signaturen zwischen Ladestation 2 und Fahrzeug 6 und/oder Abrechnungszentrale 22 ausgetauscht werden.

Die Figuren 2 zeigen die Berechnung eines Datenpakets und einer Signatur, welche über das Verbindungskabel 4 zwischen Ladestation 2 und Fahrzeug 6 und/oder über das Datennetz 20 zwischen Ladestation 2 und Abrechnungszentrale 22 ausgetauscht werden können.

Fig. 2a zeigt ein beispielhaftes erstes Datenpaket 34, in dem eine Nuterzidentifikation 19, Zählerstand 34a, optional ein Messgerätestatus 34b, optional eine Messgeräteidentifikation 34c, optional eine Zeitinformation 34d, optional ein öffentlicher Messgeräteschlüssel (PuM) 18b und/oder eventuell weitere Daten 34f in einer binären Zahlenfolge abgespeichert sind. Die Messgeräte-Identifikation 34c kann ein eindeutiger Bezeichner des Messgerätes 10 und/oder der Ladestation 2 sein.

Für eine Authentifizierung des ersten Datenpakets 34 kann eine Signatur 36 erstellt werden. Hierzu wird in einem Rechenschnitt 38 das erste Datenpaket 34 zusammen mit einem privaten Messgeräteschlüssel (PiM) 18a verwendet, um eine erste Signatur (SD) 36 zu errechnen. So kann z.B. in dem Rechenschritt 38 ein Hash-Wert aus dem ersten Datenpaket bestimmt werden und dieser Hash-Wert kann mit dem privaten Messgeräteschlüssel (PiM) in die Signatur (SD) 36 umgerechnet werden.

Für die Übertragung des ersten Datenpakets 34 an das Fahrzeug 6 und/oder die Abrechnungszentrale 22 wird das erste Datenpaket 34 mit der Signatur 36 in einem Datensatz 40 verpackt. Der Datensatz 40 wird von der Ladestation 2 über das Verbindungskabel 4 an das Fahrzeug 6 oder über das Versorgungsnetz 14 oder das Datennetz 20 oder in sonstiger Weise an die Abrechnungszentrale 22 übermittelt. Fig. 2b zeigt den Datensatz 40 gebildet aus dem ersten Datenpaket 34 und der Signatur 36.

Der Datensatz 40 kann unmittelbar an die Abrechnungszentrale 22 gesendet werden. Die hieraus erhaltenen Daten können für eine Rechnungserstellung, wie nachfolgend noch beschrieben wird, verwendet werden. Der Nutzer kann die Rechnungsdaten unter Verwendung der Signatur 36 und seiner selbst getätigten Notizen auf Authentizität und Integrität überprüfen.

Um die Übertragung weiter zu sichern, ist es alternativ und/oder zusätzlich möglich, den Datensatz zunächst an das Fahrzeug 6 zu übermitteln.

In dem Fahrzeug 6 kann mittels der Kommunikationseinheit 28 der Datensatz 40 empfangen werden. In der Signatureinheit 30 kann der Datensatz 40 ausgewertet werden. Hierbei ist es möglich, dass mit Hilfe der ersten Signatur (SD) 36 die Authentizität des ersten Datenpakets 34 überprüft werden kann.

Hierzu ist es beispielsweise möglich, dass der öffentliche Messgeräteschlüssel (PuM) 18b in dem Fahrzeug 6 bekannt ist. Mit Hilfe dieser Information kann aus der ersten Signatur (SD) 36 in dem Fahrzeug 6 der Rechenschritt 38 umgekehrt werden und das Datenpaket 34 errechnet werden. Mit Hilfe des empfangenen Datenpakets 34 und dem errechneten Datenpaket kann ein Vergleich durchgeführt werden, der die Datenintegrität sicherstellt.

Nachdem in dem Fahrzeug 6 das erste Datenpaket 34 überprüft wurde, und eventuell seine Integrität festgestellt wurde, kann, wie in Fig. 2c dargestellt ist, in dem Fahrzeug 6 mittels der Signatureinheit 30 in einem zweiten Rechenschritt 42 zunächst ein Hash-Code 44 aus dem Datensatz 40 errechnet werden.

Mit Hilfe des Hash-Codes 44 und einem privaten Fahrzeugschlüssel 46 (Pi1) kann in einem Rechenschritt 48 eine zweite Signatur (SF1) 50 errechnet werden. Hierfür kann in Rechenschritt 48 beispielsweise ein ECC-Verschlüsselungsverfahren verwendet werden. Beispielsweise kann ein SHA-256 Algorithmus verwendet werden.

Die zweite Signatur (SF1) 50 kann beispielsweise das erste Datenpaket 34 zusammen mit der ersten Signatur 36 erneut signieren.

Wie in Fig. 2d dargestellt, kann die Signatureinheit 30 die zweite Signatur (SF1) 50 an das erste Datenpaket 34 und die erste Signatur (SD) 36 anhängen. Zusätzlich kann optional der öffentliche Fahrzeugschlüssel (Pu1) angehängt werden. Das so erstellte qualifizierte Datenpaket 52 kann von dem Fahrzeug 6 über das Verbindungskabel 4 an die Ladestation 2 übermittelt werden. Anschließend kann das qualifizierte Datenpaket 52 von der Ladestation 2 mittels der Kommunikationseinheit 16a über das Datennetz 20 an die Abrechnungszentrale 22 übermittelt werden. Parallel dazu kann beispielsweise die Ladestation das Datenpaket 34 zusätzlich an die Abrechnungszentrale 22 übermitteln.

Mit Hilfe des qualifizierte Datenpakets 52 ist es möglich, die Authentizität und Integrität des ersten Datenpakets 34 und des Datensatzes 40 zu überprüfen.

Zunächst kann in der Abrechnungszentrale 22 aus dem Datenpaket 34 und der ersten Signatur (SD) 36 entsprechend dem Rechenschritt 42 eine Vergleichssignatur errechnet werden. Aus der zweiten Signatur 50 kann in der Abrechnungszentrale 22 mit Hilfe des dort bekannten oder im qualifizierten Datenpaket 52 empfangenen öffentlichen Fahrzeugschlüssels (Pu2) der Hash-Code 44 mit dem Verfahren des Rechenschritts 48 errechnet werden. Ein Vergleich des in der Abrechnungszentrale errechneten Vergleichs Hash-Code mit dem in der Abrechnungszentrale aus der zweiten Signatur (SF1) errechneten Hash-Code ermöglicht die Überprüfung der Datenintegrität. Darüber hinaus kann durch eine Zertifizierung des jeweiligen Schlüsselpaares, hier des privaten Fahrzeugschlüssels (Pi2) und des öffentlichen Fahrzeugschlüssels (Pu2), überprüft werden, von wem die zweite Signatur (SF1) errechnet wurde.

Mit Hilfe des Hash-Codes und des Vergleichs Hash-Code kann überprüft werden, ob das qualifizierte Datenpaket 52 fehlerfrei in der Abrechnungszentrale 22 empfangen wurde.

Anschließend kann in der Abrechnungszentrale 22 mit Hilfe der ersten Signatur (SD) und dem in der Abrechnungszentrale 22 bekannten öffentlichen Messgeräteschlüssels (PuM) 18b der Rechenschritt 38 umgekehrt und/oder erneut durchgeführt werden. Hierdurch kann überprüft werden, ob das Datenpaket 34 fehlerfrei von der Ladestation 2 an das Fahrzeug 6 und von dort zurück an die Abrechnungszentrale 22 übermittelt wurde.

Wenn das Datenpaket 34 und die Signatur 36 zusammenpassen, kann dies als Beleg dafür verwendet werden, dass das Datenpaket unverfälscht ist. Da in dem Datenpaket die Nutzeridentifikation 19 enthalten ist, kann somit sichergestellt werden, dass die bezogene Energie auch dem richtigen Kunden in Rechnung gestellt wird.

Für einen Kunden ist mit Hilfe der ersten Signatur (SD) bzw. dem öffentlichen Messgeräteschlüssels (PuM) 18b auch eine Überprüfung möglich, ob die in der Abrechnungszentrale 22 zu Abrechnungszwecken verwendeten Datenpakete 34 auch tatsächlich von den Ladestationen 2 stammen, an denen er Energie bezogen hat.

Hierzu kann der Nutzer z.N. von dem Computer 23 den öffentlichen Messgeräteschlüssels (PuM) 18b der Ladestation 2, dessen ID er beim Ladevorgang notiert hat, herunterladen. Er kann die Ladestations-ID mit einer Ladestations-ID auf seiner Rechnung vergleichen. Die auf diese Ladestations-ID bezogenen Rechnungsdaten (Datenpakete) sind in der Rechnung jeweils mit einer Signatur versehen. Diese Signatur 36 kann der Nutzer zusammen mit den von ihm notierten Zeitinformationen und dem geladenen öffentlichen Messgeräteschlüssels (PuM) 18b der Ladestation 2 überprüfen. Hierzu kann der Nutzer ein über den Computer 23 geladenes Programm nutzen.

Die Rechenschritte 38 und 48 können auf asymmetrischen Verschlüsselungsverfahren basieren, welche durch öffentliche und private Schlüssel die Erstellung, den Vergleich und die Validierung von Kryptogrammen ermöglichen.

Dies gewährleistet eine hohe Datenintegrität bei der Abrechnung. Auch ist eine Plausibilitätsüberprüfung möglich. Schließlich wird sichergestellt, dass das Datenpaket 34 sowohl unverfälscht in dem Fahrzeug 6 als auch unverfälscht in der Abrechnungszentrale 22 empfangen wurde.

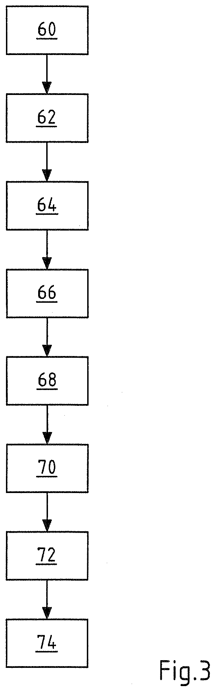

Figur 3 zeigt ein Ablaufdiagramm eines Verfahrens zur Überprüfung der Messdaten durch den Nutzer.

In einem ersten Schritt 60 begibt sich ein Nutzer mit seinem Fahrzeug 6 an eine Ladestation 2. Zu dem Zeitpunkt, zu dem das Ladekabel 4 in das Fahrzeug 6 gesteckt wurde, und der Ladevorgang beginnt, wird in der Ladestation 2, vorzugsweise im Messgerät 10 möglicherweise aber auch in der Recheneinheit 16 die aktuelle Uhrzeit oder ein Zeitindex sowie das Datum erfasst. Außerdem erfasst die Recheneinheit von dem Messgerät 10 den aktuellen Zählerstand. Darüber hinaus erfasst die Recheneinheit zumindest noch einen Status der Ladestation (z.B. in Ordnung / Fehler) und die Messgeräteidentifikation. Hierbei ist es möglich, dass Messwert, Zeit und Datum sowie Status und Signatur im Messgerät 10 erfasst werden.

Um den Ladevorgang zu starten, erfasst das Lesegerät 3 noch die Nutzeridentifikation 19. Diese kann beispielsweise berührungslos von einem Transponder ausgelesen werden. Auch kann z.B. über ein Tastenfeld an dem Lesegerät 3 die Nutzeridentifikation 19 durch den Benutzer eingegeben werden. Nach der Eingabe kann deren Gültigkeit durch Abfrage bei der Abrechnungszentrale 22 überprüft werden.

Auch ist es möglich, dass Teile der vorgenannten Daten in der Recheneinheit 16 erfasst und das Datenpaket in der Recheneinheit 16 signiert wird.

Parallel dazu kann der Nutzer ebenfalls die Uhrzeit und das Datum des Beginns des Ladevorgangs notieren. Hierzu nutzt er beispielsweise seine eigene Uhr. Auch kann der Nutzer die Messgeräteidentifikation oder eine Ladestations-ID, die bevorzugt außen an der Ladestation 2 angebracht ist, ablesen und notieren.

In einem zweiten Schritt 62 errechnet die Signatureinheit 16b aus dem Datenpaket 34, welches die oben genannten Informationen enthält, insbesondere die Nutzeridentifikation, und dem Messgeräteschlüssel 18a die Signatur 36.

Das Datenpaket 34 und die Signatur 36 wird in einem nächsten Schritt 64 an die Abrechnungszentrale 22 übermittelt.

In einem nächsten Schritt 66 schließt der Nutzer den Ladevorgang ab. Zu diesem Zeitpunkt erfasst die Recheneinheit 16 erneut die aktuelle Uhrzeit oder ein Zeitindex sowie das Datum. Außerdem erfasst die Recheneinheit erneut von dem Messgerät 10 den aktuellen Zählerstand. Darüber hinaus erfasst die Recheneinheit erneut zumindest noch einen Status der Ladestation (z.B. in Ordnung / Fehler) und die Messgeräteidentifikation.

Parallel dazu kann der Nutzer ebenfalls erneut die Uhrzeit und das Datum des Endes des Ladevorgangs notieren. Hierzu nutzt er beispielsweise seine eigene Uhr.

In einem nächsten Schritt 68 errechnet die Signatureinheit 16b aus dem neuen Datenpaket 34, welches die oben genannten Informationen enthält, und dem Messgeräteschlüssel 18a die neue Signatur 36.

Das neue Datenpaket 34 und die neue Signatur 36 wird in einem nächsten Schritt 70 an die Abrechnungszentrale 22 übermittelt.

In der Abrechnungszentrale 22 werden aus den beiden empfangenen Datenpaketen die rechnungsrelevanten Informationen in Schritt 72 ermittelt.

Für einen Kunden bzw. eine Vertrags-ID werden über einen Rechnungszeitraum alle Ladevorgänge gesammelt.

Zum Zeitpunkt der Rechnungsstellung 74 erhält der Nutzer eine Rechnung. Diese Rechnung weist zum einen für jeden Tarif die gesamte bezogene Energiemenge und den Preis aus.

Außerdem weist die Rechnung für jeden Ladevorgang die Start- und Endzeit, das Datum, die Ladestations-ID, die Zählernummer, die Adresse der Ladestation 2, die Zählerstände zu Beginn und zum Ende des Ladevorgangs und die Energiemenge aus.

Darüber hinaus weist die Rechnung für jede Startzeit und jede Endzeit die Zählernummer, den Zählerstand, den Messgerätestatus und die Signatur 36 aus. Diese Signatur 36 ist die in der Ladestation 2 berechnete Signatur. Diese Daten stehen auch abrufbar online dem Kunden zur Verfügung.

Ebenfalls abrufbar zur Verfügung stehen dem Kunden öffentliche Messgeräteschlüssel.

In einem Schritt 74 kann der Kunde mit den von ihm notierten Zeitinformationen und Messgeräteidentifikationen die ihm mitgeteilten Signaturen überprüfen. Hierzu kann er die notierten Informationen zusammen mit den mitgeteilten Informationen zum Zählerstand und Status verwenden, um mit dem öffentlichen Messgeräteschlüssel die Signatur zu prüfen. Hierzu kann er ein ebenfalls abrufbar bereitgestelltes Programm nutzen.

Mit Hilfe des gezeigten Verfahrens ist es möglich, Datenintegrität und Authentizität bei der Übertragung von Messdaten zwischen einer Ladestation und einem Fahrzeug und/oder einer Abrechnungszentrale sicherzustellen. Die Verwendung einer Signatur, welche mittels eines ECC-Verschlüsselungsverfahrens erstellt werden kann, und beispielsweise aus einem Hash-Code errechnet werden kann, ermöglicht es, die Authentizität und die Integrität der Messwerte in den Empfangseinrichtungen zu überprüfen. Die Berechnung der Signaturen kann mittels Public-Key-Verfahren erfolgen. Der Vorteil hiervon ist, dass die Datenpakete, die errechnet werden, aufgrund der Signatur nicht unnötig vergrößert werden. Die Länge der Datenpakete ist ein entscheidendes Kriterium für den Datenverkehr sowohl zwischen Ladestation 2 und Fahrzeug 6, als auch zwischen Ladestation 2 und Abrechnungszentrale 22. Die Signatur als auch eine mögliche Verschlüsselung dürfen die Datenpakete nicht zu groß werden lassen, da ansonsten das Datenvolumen zu groß wäre. Für den massenhaften Einsatz eignen sich somit Public-Key-Verfahren in besonderer Weise.

## Patentansprüche

1. Verfahren zur Zuordnung eines von einer Ladestation erfassten Messwertes zu einem Nutzer mit
- Erfassen zumindest eines die von einem Fahrzeug (6) von der Ladestation (2) bezogenen Energiemenge repräsentierenden Messgerätezählerstands in einem Messgerät (10) innerhalb der Ladestation (2),
- Erfassen einer Nutzeridentifikation (19) durch die Ladestation (2),
- Erstellen eines Datenpakets (34) umfassend zumindest den Messgerätezählerstand, die Nutzeridentifikation (19) und einen eindeutigen Bezeichner der Ladestation (34c),
- Erstellen einer eindeutigen Beschreibung des Datenpakets (34) in dem Messgerät (10),
- Übermitteln zumindest des Datenpakets (34) und der Beschreibung (36) von der Ladestation (2) an das Elektrofahrzeug (6) und/oder eine Abrechnungszentrale (22) .

2. Verfahren nach Anspruch 1, **dadurch gekennzeichnet, dass** die eindeutige Beschreibung eine erste Signatur (36) oder ein Protokollausdruck zur dauerhaften, eindeutigen Protokollierung eines mit einer Nutzeridentifikation verknüpften Messgerätezählerstands ist.

3. Verfahren nach Anspruch 1, **dadurch gekennzeichnet, dass** die eindeutige Beschreibung derart mit dem Inhalt des Datenpakets verknüpft ist, dass eine Veränderung des Inhalts des Datenpakets eine veränderte Beschreibung bewirkt.

4. Verfahren nach einem der Ansprüche 1 bis 3, **dadurch gekennzeichnet, dass** das Datenpaket (34) neben der Nutzeridentifikation (19) und dem Messgerätezählerstand zumindest eine der Informationen aus
A) einer Messgeräteidentifikation,
B) einem Messgerätestatus,
C) Zeitinformationen,
D) Datumsinformationen,
E) einer Vertragsidentifikation,
F) einem öffentlichen Messgeräteschlüssel (34e);
G) einem Zeit-Index;
enthält.

5. Verfahren nach einem der Ansprüche 1 bis 4, **dadurch gekennzeichnet, dass** die Nutzeridentifikation (19) über an der Ladestation (2) angeordnete Erfassungsmittel (3) erfasst wird.

6. Verfahren nach Anspruch 5, **dadurch gekennzeichnet, dass** die Nutzeridentifikation (19) von der Ladestation (2) drahtgebunden, mittels RFID, manueller Nutzereingabe, biometrischer Nutzerdaten, von dem Fahrzeug und/oder drahtlos erfasst wird.

7. Verfahren nach einem der Ansprüche 2 bis 6, **dadurch gekennzeichnet, dass** der Messgeräteschlüssel (18) zumindest einen öffentlichen Messgeräteschlüssel (18a) und einen privaten Messgeräteschlüssel (18b) enthält und dass die erste Signatur (36) mit Hilfe des privaten Messgeräteschlüssels (18b) erstellt wird.

8. Verfahren nach einem der Ansprüche 1 bis 7, **dadurch gekennzeichnet, dass** in der Ladestation (2) ein qualifiziertes Datenpaket von dem Elektrofahrzeug (6) empfangen wird, wobei das qualifizierte Datenpaket zumindest das von der Ladestation an das Elektrofahrzeug übermittelte Datenpaket, die eindeutige Beschreibung und eine zweite Signatur (50), eine dritte Signatur und/oder eine vierte Signatur enthält.

9. Ladestation zur Zuordnung eines von der Ladestation erfassten Messwertes zu einem Nutzer mit
- einer Messeneinrichtung (10) eingerichtet zum Erfassen zumindest eines die von einem Fahrzeug (6) von der Ladestation (2) bezogenen Energiemenge repräsentierenden Messgerätezählerstands in der Ladestation (2),
- Erfassungsmitteln (3) zum Erfassen einer Nutzeridentifikation (19),
- einer Signatureinrichtung (12) innerhalb der Messeinrichtung (10) eingerichtet zum Erstellen eines Datenpakets (34) umfassend zumindest den Messgerätezählerstand und die Nutzeridentifikation (19) und einen eindeutigen Bezeichner der Ladestation (34c), und zum Erstellen einer eindeutigen Beschreibung des Datenpakets,
- und einer Kommunikationseinrichtung (16a) eingerichtet zum Übermitteln zumindest des Datenpakets (34) und der eindeutigen Beschreibung von der Ladestation (2) an das Elektrofahrzeug und/oder eine Abrechnungszentrale (22).

## Claims

1. Method for assigning a measured value recorded by a charging station to a user comprising
- Detection of at least one measuring device meter reading in a measuring device (10) inside the charging station (2) representing the amount of energy drawn from the charging station (2) by a vehicle (6),
- Acquisition of a user identification (19) by the charging station (2),
- Creating a data packet (34) comprising at least the measuring device meter reading, the user identification (19) and a unique identifier of the charging station (34c),
- Creating a unique description of the data packet (34) in the measuring device (10),
- transmitting at least the data packet (34) and the description (36) from the charging station (2) to the electric vehicle (6) and/or a billing centre (22).

2. Method according to claim 1, **characterized in that** the unique description is a first signature (36) or a protocol printout for the permanent, unique logging of a meter reading associated with a user identification.

3. Method according to claim 1, **characterized in that** the unique description is linked to the content of the data packet in such a way that a change in the content of the data packet causes a changed description.

4. Method according to one of the claims 1 to 3, **characterized in that** the data packet (34), in addition to the user identification (19) and the measuring device meter reading, contains at least one of the information from
A) an identification of a measuring device,
B) a measuring device,
C) time information,
D) date information,
E) a contract identification,
F) a public measuring device key (34e);
G) a time index.

5. Method according to one of claims 1 to 4, **characterized in that** the user identification (19) is detected via detection means (3) arranged at the charging station (2).

6. Method according to claim 5, **characterized in that** the user identification (19) is recorded by the charging station (2) in a wired manner, by means of RFID, manual user input, biometric user data, by the vehicle and/or wirelessly.

7. Method according to one of claims 2 to 6, **characterized in that** the measuring device key (18) contains at least a public measuring device key (18a) and one private measuring device key (18b) and that the first signature (36) is created with the aid of the private measuring instrument key (18b).

8. Method according to one of claims 1 to 7, **characterized in that** a qualified data packet is received from the electric vehicle (6) in the charging station (2), the qualified data packet containing at least the data packet transmitted from the charging station to the electric vehicle, the unique description and a second signature (50), a third signature and/or a fourth signature.

9. Charging station for assigning a measured value recorded by the charging station to a user with
- a measuring device (10) arranged to detect at least one measuring device meter reading in the charging station (2) representing the amount of energy obtained by a vehicle (6) from the charging station (2),
- detection means (3) for detecting a user identification (19),
- a signature device (12) within said measuring means (10) arranged to create a data packet (34) comprising at least said meter reading and said user identification (19) and a unique identifier of said charging station (34c), and to create a unique description of said data packet,
- and a communication device (16a) arranged to transmit at least the data packet (34) and the unique description from the charging station (2) to the electric vehicle and/or a billing centre (22).

## Revendications

1. Procédé d'affectation, à un utilisateur, d'une valeur mesurée ayant été saisie par une borne de recharge, ledit procédé consistant :
- à saisir, dans un appareil de mesure (10) placé à l'intérieur de la borne de recharge (2), au moins une indication affichée par le compteur de l'appareil de mesure et représentant la quantité d'énergie reçue par un véhicule (6) depuis la borne de recharge (2),
- à saisir, par la borne de recharge (2), une identification d'utilisateur (19),
- à créer un paquet de données (34) comprenant au moins l'indication affichée par le compteur de l'appareil de mesure, l'identification (19) de l'utilisateur et un identifiant unique de la borne de recharge (34c),
- à créer, dans l'appareil de mesure (10), une description unique du paquet de données (34),
- à transmettre au moins le paquet de données (34) et la description (36), depuis la borne de recharge (2) jusqu'au véhicule électrique (6) et/ou jusqu'à un centre de facturation (22).

2. Procédé selon la revendication 1, **caractérisé en ce que** la description unique est une première signature (36) ou une impression de contrôle servant à l'enregistrement unique et durable d'une indication affichée par le compteur de l'appareil de mesure, ladite indication étant associée à une identification de l'utilisateur.

3. Procédé selon la revendication 1, **caractérisé en ce qu'**une description unique est associée au contenu du paquet de données, de manière telle qu'une modification du contenu du paquet de données provoque une description modifiée.

4. Procédé selon l'une quelconque des revendications 1 à 3, **caractérisé en ce que** le paquet de données (34), en plus de l'identification (19) de l'utilisateur et en plus de l'indication affichée par le compteur de l'appareil de mesure, contient au moins l'une des informations se composant :
A) d'une identification de l'appareil de mesure,
B) d'un état de l'appareil de mesure,
C) d'informations de temps,
D) d'informations de dates,
E) d'une identification de contrat,
F) d'une clé publique (34e) de l'appareil de mesure,
G) d'un indice de temps.

5. Procédé selon l'une quelconque des revendications 1 à 4, **caractérisé en ce que** l'identification (19) de l'utilisateur est saisie par des moyens de saisie (3) disposés sur la borne de recharge (2).

6. Procédé selon la revendication 5, **caractérisé en ce que** l'identification (19) de l'utilisateur est saisie par liaison filaire depuis la borne de recharge (2), est saisie depuis le véhicule et/ou sans fil, au moyen d'une identification RFID, d'une entrée manuelle de l'utilisateur, au moyen de données biométriques de l'utilisateur.

7. Procédé selon l'une quelconque des revendications 2 à 6, **caractérisé en ce que** la clé (18) de l'appareil de mesure comprend au moins une clé publique (18a) de l'appareil de mesure et une clé privée (18b) de l'appareil de mesure, et **en ce que** la première signature (36) est créée à l'aide de la clé privée (18b) de l'appareil de mesure.

8. Procédé selon l'une quelconque des revendications 1 à 7, **caractérisé en ce qu'**un paquet de données qualifié est reçu, dans la borne de recharge (2), par le véhicule électrique (6), où le paquet de données qualifié contient au moins le paquet de données transmis au véhicule électrique depuis la borne de recharge, contient la description unique et une deuxième signature (50), une troisième signature et/ou une quatrième signature.

9. Borne de recharge servant à l'affectation, à un utilisateur, d'une valeur mesurée ayant été saisie par la borne de recharge, ladite borne de recharge comprenant :
- un dispositif de mesure (10) installé dans la borne de recharge (2) et servant à la saisie au moins d'une indication affichée par le compteur de l'appareil de mesure et représentant la quantité d'énergie reçue par un véhicule (6) depuis la borne de recharge (2),
- des moyens de saisie (3) servant à la saisie d'une identification (19) de l'utilisateur,
- un dispositif de signature (12) installé à l'intérieur du dispositif de mesure (10) et servant à la création d'un paquet de données (34) comprenant au moins l'indication affichée par le compteur de l'appareil de mesure et l'identification (19) de l'utilisateur, ainsi qu'un identifiant unique de la borne de recharge (34c), ledit dispositif de signature servant aussi à la création d'une description unique du paquet de données,
- et un dispositif de communication (16a) installé pour transmettre au moins le paquet de données (34) et la description unique, depuis la borne de recharge (2) jusqu'au véhicule électrique et/ou jusqu'à un centre de facturation (22).
